# EUROPÄISCHE PATENTSCHRIFT

(11) **EP 3 422 558 B1**
(45) Veröffentlichungstag und Bekanntmachung des Hinweises auf die Patenterteilung: **10.06.2020**
(21) Anmeldenummer: 18180278.6
(22) Anmeldetag: 28.06.2018
(51) Int. Cl.: B65G 43/10, B60L 13/03, H02P 6/00, H02P 25/06, B65G 54/02, H02K 41/03, B60L 15/40

(54) **LANGSTATORLINEARMOTOR UND VERFAHREN ZUM BEWEGEN EINER TRANSPORTEINHEIT EINES LANGSTATORLINEARMOTORS**
LONG STATOR LINEAR MOTOR AND METHOD FOR MOVING A TRANSPORT UNIT OF A LONG STATOR LINEAR MOTOR
MOTEUR LINÉAIRE À STATOR LONG ET PROCÉDÉ DE DÉPLACEMENT D'UNE UNITÉ DE TRANSPORT D'UN MOTEUR LINÉAIRE À STATOR LONG

(30) Priorität: 29.06.2017 AT 505332017
(43) Veröffentlichungstag der Anmeldung: 02.01.2019
(73) Patentinhaber: B&R Industrial Automation GmbH, 5142 Eggelsberg (AT)
(72) Erfinder: Weber, Andreas, 5020 Salzburg (AT); Plainer, Manuel, 4890 Weißenkirchen i.A. (AT); Brucker, Stefan, 5020 Salzburg (AT)
(74) Vertreter: Patentanwälte Pinter & Weiss OG

(56) Entgegenhaltungen:
- EP-A1- 1 270 312
- EP-A1- 3 024 128
- CN-A- 102 185 559
- DE-A1-102008 008 602
- US-A1- 2015 344 233

## Beschreibung

Die gegenständliche Erfindung betrifft einen Langstatorlinearmotor mit einer Mehrzahl von Antriebsspulen, die einen Langstator des Langstatorlinearmotor ausbilden, entlang dem eine Transporteinheit mit einer Anordnung von Antriebsmagneten in Bewegungsrichtung bewegbar ist, wobei der Langstator in zumindest eine erste Regelungszone mit einer Mehrzahl von Antriebsspulen und eine zweite Regelungszone mit einer Mehrzahl von Antriebsspulen aufgeteilt ist, wobei der ersten Regelungszone eine erste Segmentregelungseinheit zum Regeln der Antriebsspulen der ersten Regelungszone zugeordnet ist und der zweiten Regelungszone eine zweite Segmentregelungseinheit zum Regeln der Antriebsspulen der zweiten Regelungszone zugeordnet ist, indem in einer Regelungszone die zugeordnete Segmentregelungseinheit die Stellgrößen zum Bestromen der für das Bewegen der Transporteinheit benötigten Antriebsspulen in der Regelungszone berechnet, solange sich die Transporteinheit ausschließlich in einer Regelungszone befindet. Ferner betrifft die Erfindung ein Verfahren zum Bewegen einer Transporteinheit eines solchen Langstatorlinearmotors.

Langstatorlinearmotoren und deren Anwendungen, insbesondere für flexible Transportzwecke, sowie deren Funktionsweise sind seit vielen Jahren bekannt. Langstatorlinearmotoren bestehen allgemein aus einer Anzahl von ortsfest, nebeneinander angeordneten Antriebsspulen, die den Langstator des Langstatorlinearmotor ausbilden. Der Langstator bildet eine Förderstrecke aus, entlang der einzelne Transporteinheiten bewegt werden können. Die Transporteinheiten werden dabei an der Förderstrecke gehalten und geführt. An einer Transporteinheit sind hierfür Antriebsmagnete (Permanent- oder Elektromagnete) angeordnet, die mit dem von den Antriebsspulen erzeugten Magnetfeld zusammenwirken. Durch gezieltes Ansteuern der Antriebsspulen, insbesondere durch Anlegen einer entsprechenden Spulenspannung zum Erzeugen eines Antriebsstromes, kann ein in Bewegungsrichtung entlang der Förderstrecke bewegtes Magnetfeld erzeugt werden, wodurch eine mit dem bewegten Magnetfeld zusammenwirkende Transporteinheit in Bewegungsrichtung (Richtung des bewegten Magnetfeldes) bewegt werden kann. Auf diese Weise können eine Vielzahl von Transporteinheiten unabhängig voneinander entlang der Förderstrecke bewegt werden. Der Aufbau und die Funktion und die Steuerung solcher Langstatorlinearmotoren sind hinlänglich bekannt, weshalb hier nicht näher darauf eingegangen wird. Beispiele hierzu können der WO 2013/143783 A1, der WO 98/50760 A2, der US 6,876,107 B2, der US 2013/0074724 A1 oder der EP 1 270 311 B1 entnommen werden. In der Regel ist ein Langstatorlinearmotor mit einer Vielzahl von nebeneinander angeordneten Spulensegmenten mit einer Anzahl von Antriebsspulen aufgebaut, wie z.B. in der US 6,876,107 B2.

In der US 6,876,107 B2, der EP 1 270 312 A1 und der EP 1 270 311 B1 wird beispielsweise jeweils auch die Regelungsstruktur näher erläutert. Hierbei kommt in der Regel eine modulare Regelungsstruktur zur Anwendung, bei der eine Vielzahl von Segmentreglern vorgesehen sind, die jeweils eine bestimmte Anzahl von Antriebsspulen regeln, vorzugsweise die Antriebsspulen eines Spulensegments (falls vorhanden). Durch die Segmentregler werden jeweils die Antriebsströme der Antriebsspulen ermittelt, die für die Bewegung einer Transporteinheit des Langstatorlinearmotors benötigt werden. Diese Antriebsspulenströme werden durch Anlegen entsprechender Spannungen an den Antriebsspulen erzeugt. Zur Regelung der Bewegung einer Transporteinheit ist es auch erforderlich, die jeweilige Istposition der zu regelnden Transporteinheit zu ermitteln, vorzugsweise über geeignete Positionssensoren.

Aufgrund der modularen Regelungsstruktur ist es jedoch erforderlich, die Regelung einer Transporteinheit in geordneter Weise von einem Segmentregler auf den nachfolgenden Segmentregler zu übergeben, wenn die Transporteinheit die Segmentgrenze überfährt. Nachdem üblicherweise mehrere Antriebsspulen gleichzeitig mit den Antriebsmagneten einer Transporteinheit zusammenwirken, müssen für deren Bewegung auch mehrere Antriebsspulen bestromt werden. Im Bereich einer Segmentgrenze kann es daher passieren, dass Antriebsspulen verschiedener Segmentregler bestromt werden müssen. Diese verschiedenen Segmentregler müssen daher in geeigneter Weise zusammenarbeiten, um eine nahtlose Bewegung einer Transporteinheit über eine Segmentgrenze hinweg sicherzustellen.

Die EP 1 270 311 B1 bzw. EP 1 270 312 A1 schlägt dazu vor, dass die einzelnen Segmentregler über eine leistungsfähige Kommunikationsschnittstelle verbunden sind, um bewegungsrelevante Daten auszutauschen. Ein erster Segmentregler erfasst die Position einer Transporteinheit in der zugeordneten ersten Regelungszone (entspricht einer Anzahl von Antriebsspulen, z.B. ein Spulensegment) und ermittelt anhand der erfassten Istposition, sowie einer vorgegebenen Sollposition mittels eines geeigneten Reglers die einzustellende Vortriebskraft auf die Transporteinheit, die benötigt wird, um den Fehler zwischen Istposition und Sollposition auszureglen. Aus der ermittelten Vortriebskraft werden dann im Segmentregler die Antriebsströme der zu bestromenden Antriebspulen ermittelt, die benötigt werden, um die Vortriebskraft einzustellen. Kommt die Transporteinheit in den Bereich der Grenze zur nachfolgenden zweiten Regelungszone ermittelt der erste Segmentregler nachwievor die Istposition und die Vortriebskraft, aus der wiederum die Antriebsströme in der ersten Regelungszone berechnet werden. Gleichzeitig übermittelt der erste Segmentregler die erfasste Istposition und die einzustellende Vortriebskraft über die Kommunikationsschnittstelle an den zweiten Segmentregler der nachfolgenden zweiten Regelungszone. Der zweite Segmentregler berechnet daraus genauso wie der erste Segmentregler anhand eines geeigneten Reglers die Antriebsströme für die Antriebsspulen, die dem zweiten Segmentregler zugeordnet sind. Irgendwann wechselt die Positionserfassung der Transporteinheit auf den zweiten Segmentregler, der dann die einzustellende Vortriebskraft berechnet, die in weitere Folge vom zweiten Segmentregler gemeinsam mit der erfassten Istposition zum ersten Segmentregler kommuniziert wird, der die Spulenströme der Antriebsspulen seiner ersten Regelungszone berechnet. Wenn die Transporteinheit nur mehr von Antriebsspulen der zweiten Regelungszone bewegt wird, dann ist nur mehr der zweite Segmentregler aktiv.

Auch die DE 10 2008 008 602 A1 beschreibt ein ähnliches Verfahren zum Durchführen eines geordneten Übergangs einer Transporteinheit eines Langstatorlinearmotors über Segmentgrenzen hinweg.

In der US 2015/0344233 A1 ist ein LLM mit zwei Segmentreglern offenbart, wobei der erste Segmentregler die Bewegung der Transporteinheiten in einer ersten Zone zwischen zwei Grenzpunkten regelt und der zweite Segmentregler die Bewegung der Transporteinheiten einer zweiten Zone zwischen den Grenzpunkten regelt. Die Segmente, auf denen die Grenzpunkte liegen sind als dual slave motoren ausgeführt, welche mit beiden Segmentreglern kommunizieren. Die Antriebsspulen der dual slave motoren erhalten die Stellgrößen parallel von beiden Segmentreglern.

Die CN 102185559 A offenbart ein LLM-Transportsystem mit parallelen Langstatoren, die jeweils in zwei in Längsrichtung aufeinander folgende Segmente unterteilt sind, wobei jeweils ein bestimmter Abstand zwischen den Segmenten vorgesehen ist. Die Teilungen sind so vorgesehen, dass sich gegenüberliegende Segmente in einem zentralen Bereich teilweise überlappen. Es sind zwei Segmentregler vorgesehen, die miteinander verbunden sind, um Daten auszutauschen. Die Bewegungssteuerung der Transporteinheit erfolgt so, dass im linken Bereich die Regelung der gegenüberliegenden Segmente ausschließlich durch einen ersten Segmentregler erfolgt, so lange, bis die erste (obere) Teilung erreicht ist. Im Überlappungsbereich regelt der erste Segmentregler das zugeordnete (untere) Segment und sendet die Sollgrößen an einen zweiten Segmentregler zur Regelung des (oberen) Segments. Ab der Teilung übernimmt der zweite Segmentregler vollständig die Regelung der beiden gegenüberliegenden Segmente.

Ausgehend von diesen bekannten Verfahren zum Durchführen eines geordneten Übergangs einer Transporteinheit eines Langstatorlinearmotors über Regelungszonen hinweg, ist es eine Aufgabe der gegenständlichen Erfindung, ein einfacheres Verfahren und einen Langstatorlinearmotor hierfür anzugeben.

Diese Aufgabe wird gelöst, indem bei Übergang der Transporteinheit von der in Bewegungsrichtung ersten Regelungszone auf die nachfolgende zweite Regelungszone, wobei zum Bewegen der Transporteinheit Antriebsspulen der ersten Regelungszone und der zweiten Regelungszone bestromt werden, zuerst die erste Segmentregelungseinheit für die Regelung der Bewegung der Transporteinheit zuständig bleibt und die erste Regelungszone in Bewegungsrichtung um eine Anzahl virtueller Antriebsspulen erweitert wird und die der ersten Regelungszone zugeordnete erste Segmentregelungseinheit auch die Stellgrößen für die benötigten virtuellen Antriebsspulen berechnet, die erste Segmentregelungseinheit die benötigten Stellgrößen für die benötigten virtuellen Antriebsspulen an die der zweiten Regelungszone zugeordneten zweiten Segmentregelungseinheit übermittelt und die zweite Segmentregelungseinheit die übermittelten Stellgrößen für die benötigten virtuellen Antriebsspulen zum Bestromen der für das Bewegen der Transporteinheit benötigten Antriebsspulen der zweiten Regelungszone verwendet. Auf diese Weise sind die Stellgrößen für die zur Bewegung der Transporteinheit benötigten Antriebsspulen immer nur von einer Segmentregelungseinheit zu berechnen, was den Rechenaufwand in den Segmentregelungseinheiten reduziert. Zudem müssen über die Datenkommunikationsleitung keine Positionsmesswerte und keine Vortriebskraft übergeben werden, wie bisher im Stand der Technik üblich, sondern es können direkt die Stellgrößen für die Antriebsspulen übergeben werden.

Ein besonders einfaches Verfahren ergibt sich, wenn die zweite Segmentregelungseinheit die virtuellen Antriebsspulen der ersten Regelungszone Antriebsspulen der zweiten Regelungszone zuordnet und die erhaltenen Stellgrößen der virtuellen Antriebsspulen zum Bestromen der zugeordneten Antriebsspulen der zweiten Regelungszone verwendet. Damit können die Stellgrößen der virtuellen Antriebsspulen direkt als Stellgrößen der in der zweiten Regelungszone tatsächlich vorhandenen Antriebsspulen verwendet werden.

Es ist weiters vorteilhaft, wenn ab einem definierten Zeitpunkt des Übergangs die Zuständigkeit für die Regelung der Bewegung der Transporteinheit auf die zweite Segmentregelungseinheit der zweiten Regelungszone wechselt und die zweite Regelungszone entgegen der Bewegungsrichtung um eine Anzahl virtueller Antriebsspulen erweitert wird und die der zweiten Regelungszone zugeordnete zweite Segmentregelungseinheit auch die Stellgrößen für die benötigten virtuellen Antriebsspulen berechnet, die zweite Segmentregelungseinheit die benötigten Stellgrößen für die benötigten virtuellen Antriebsspulen an die der ersten Regelungszone zugeordnete erste Segmentregelungseinheit übermittelt und die erste Segmentregelungseinheit die übermittelten Stellgrößen für die benötigten virtuellen Antriebsspulen zum Bestromen der für das Bewegen der Transporteinheit benötigten Antriebsspulen der ersten Regelungszone verwendet. Auch hier kann eine direkte Zuordnung der virtuellen Antriebsspulen zu tatsächlich vorhandenen Antriebsspulen vorteilhaft vorgesehen sein.

Eine ausgewogene Aufteilung der Regelung der Bewegung einer Transporteinheit kann erzielt werden, wenn die Zuständigkeit von der ersten Segmentregelungseinheit auf die zweite Segmentregelungseinheit wechselt, wenn die Mitte der Anordnung der Antriebsmagnete der Transporteinheit von der ersten Regelungszone auf die zweite Regelungszone übergeht. Damit teilt sich die benötigte Rechenleistung im Wesentlichen zwischen den beiden Segmentregelungseinheit auf.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 einen Langstatorlinearmotor mit Regelungszonen und Antriebsspulen, die von zugeordneten Segmentregelungseinheiten geregelt werden,
Fig.2 einen Übergang einer Transporteinheit von einer ersten Regelungszone auf eine zweite Regelungszone und
Fig.3a bis 3d den erfindungsgemäßen Ablauf des Überganges.

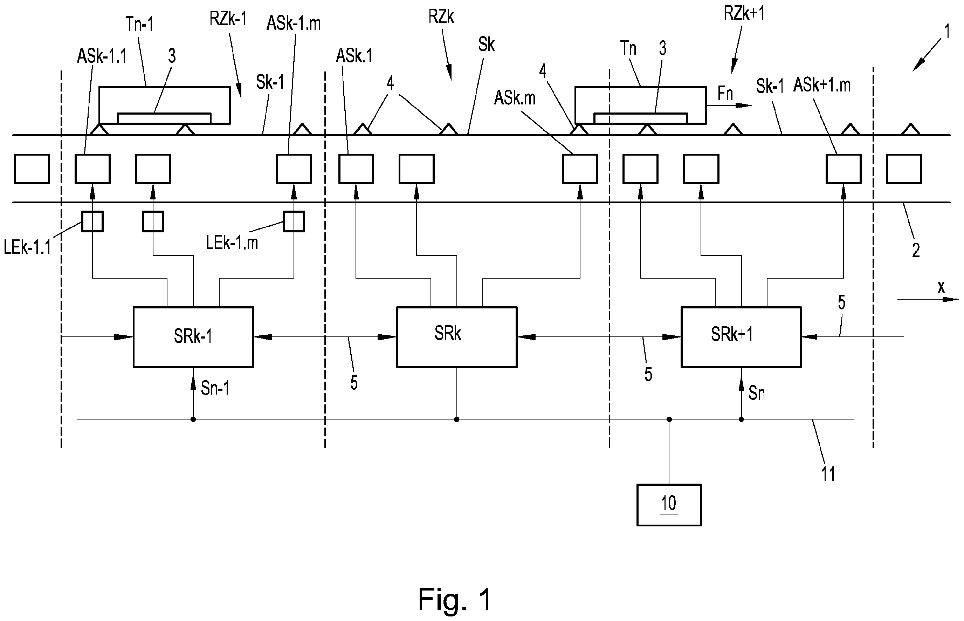

Mit Fig.1 wird der an sich bekannte grundlegende Aufbau eines Langstatorlinearmotor 1 beschrieben. Eine Vielzahl von Antriebsspulen ASk-1.1, ..., ASk+1.m sind ortsfest nebeneinander angeordnet, um den Langstator 2 des Langstatorlinearmotors 2 auszubilden. Der Langstator muss dabei nicht unbedingt in einer geraden Linie angeordnet sein, wie in Fig.1, sondern kann, zumindest abschnittsweise, natürlich auch beliebig gekrümmt sein. In der Regel, aber nicht notwendigerweise, sind eine Anzahl von Spulensegmenten Sk-1, Sk, Sk+1 vorgesehen, an denen jeweils eine Anzahl m von Antriebsspulen ASk-1.1, ..., ASk-1.m, ASk.1, ..., ASk.m, ASk+1.1,..., ASk+1.m angeordnet sind. Es ist allerdings anzumerken, dass nicht jedes Spulensegment Sk-1, Sk, Sk+1 die gleiche Anzahl m von Antriebsspulen aufweisen muss. Ein Spulensegment Sk-1, Sk, Sk+1 ist dann ein modularer Teil des Langstatorlinearmotors 1 und der Langstator 2 kann durch das nebeneinander Anordnen solcher Spulensegmente Sk-1, Sk, Sk+1 aufgebaut werden. Ein Spulensegment Sk-1, Sk, Sk+1 kann dabei beliebig geformt sein, beispielsweise als Gerade, Kurve, S-Kurve, Bogen, Weiche, etc., was eine vielfältige Gestaltungsmöglichkeit für den Langstator 2 ergibt.

Entlang des Langstators 2 können gleichzeitig eine Vielzahl von Transporteinheiten Tn (mit n≥1) bewegt werden. An einer Transporteinheit Tn ist dazu jeweils zumindest ein Antriebsmagnet 3, entweder als Permanentmagnet oder Elektromagnet, angeordnet, dessen Magnetfeld mit dem elektromagnetischen Feld, das von den Antriebsspulen im Bereich der Transporteinheit Tn erzeugt wird, zusammenwirkt, um eine Vortriebskraft Fn auf die Transporteinheit zu erzeugen. Durch Erzeugen eines in Bewegungsrichtung x bewegten elektromagnetischen Feldes kann die Transporteinheit Tn entlang des Langstators 2 bewegt werden. Damit können in bekannter Weise gleichzeitig mehrere Transporteinheiten Tn auf beliebige Weise (Position, Richtung, Geschwindigkeit, Beschleunigung) bewegt werden, indem jeweils die mit der Transporteinheit Tn zusammenwirkenden Antriebsspulen ASk-1.1, ..., ASk+1.m wie für die gewünschte Bewegung benötigt bestromt werden.

Dazu sind Segmentregelungseinheiten SRk-1, SRk, SRk+1, in Form von geeigneter Computer- oder Mikrocontrollerhardware und/oder Computer- oder Mikrocontrollersoftware, vorgesehen. Eine Segmentregelungseinheit SRk-1, SRk, SRk+1 ist dabei für eine Regelungszone RZk-1, RZk, RZk+1 mit jeweils einer Anzahl von Antriebsspulen ASk-1.1, ..., ASk+1.m zuständig. Falls Spulensegmente Sk-1, Sk, Sk+1 vorgesehen sind, ist eine Segmentregelungseinheit SRk-1, SRk, SRk+1 vorzugsweise für die Antriebsspulen ASk-1.1, ..., ASk-1.m, ASk.1, ..., ASk.m, ASk+1.1,..., ASk+1.m jeweils eines Spulensegmentes Sk-1, Sk, Sk+1 zuständig, wie in Fig.1 angedeutet. In diesem Fall entspricht eine Regelungszone RZk-1, RZk, RZk+1 einem Spulensegment Sk-1, Sk, Sk+1, was aber nicht notwendig ist. Der Einfachheit halber wird in der nachfolgenden Beschreibung aber davon ausgegangen.

Die Segmentregelungseinheiten SRk-1, SRk, SRk+1 sind dafür zuständig, für die Antriebsspulen ASk-1.1, ..., ASk-1.m, ASk.1, ..., ASk.m, ASk+1.1, ..., ASk+1.m der zugeordneten Regelungszone RZk-1, RZk, RZk+1 die Stellgrößen für die Antriebsspulen ASk-1.1, ..., ASk-1.m, ASk.1, ..., ASk.m, ASk+1.1, ..., ASk+1.m, in der Regel anzulegende Spulenspannungen oder Spulenströme, zu ermitteln, die zum Bewegen einer Transporteinheit Tn eingestellt werden müssen. Das erfolgt in jedem Zeitschritt der Regelung der Bewegung der Transporteinheit Tn. Natürlich können in einer Regelungszone RZk-1, RZk, RZk+1 auch gleichzeitig mehrere Transporteinheiten Tn bewegt werden. In diesem Fall berechnen die Segmentregelungseinheiten SRk-1, SRk, SRk+1 die benötigten Stellgrößen aller zu bestromenden Antriebsspulen ASk-1.1, ..., ASk-1.m, ASk.1, ..., ASk.m, ASk+1.1,..., ASk+1.m der jeweiligen Regelungszone RZk-1, RZk, RZk+1.

Leistungselektronikeinheiten LEk-1.1, ..., LEk+1.m (in Fig.1 zur Vereinfachung nur für einige Antriebsspulen dargestellt) sorgen dafür, dass die benötigten Spulenspannungen in jedem Zeitschritt der Regelung an den benötigen Antriebsspulen ASk-1.1, ..., ASk-1.m, ASk.1, ..., ASk.m, ASk+1.1, ..., ASk+1.m angelegt werden. Dazu erzeugen die Leistungselektronikeinheiten LEk-1.1, ..., LEk+1.m die elektrischen Spannungen für die Antriebsspulen ASk-1.1, ..., ASk-1.m, ASk.1, ..., ASk.m, ASk+1.1, ..., ASk+1.m aufgrund der vorgegebenen Stellgrößen (Spulenspannung oder ein Spulenstrom). Im letzteren Fall erfolgt auch eine Umrechnung eines Spulenstromes in eine äquivalente Spulenspannung. Die Leistungselektronikeinheiten LEk-1.1, ..., LEk+1.m können eigenständige Hardwareeinheiten sein, können aber auch in den Segmentregelungseinheiten SRk-1, SRk, SRk+1 integriert sein.

Zur Regelung der Bewegung einer Transporteinheit Tn erhalten die Segmentregelungseinheiten SRk-1, SRk, SRk+1 Sollwerte Sn der Bewegung jeder Transporteinheit Tn, beispielsweise eine Sollposition und/oder eine Sollgeschwindigkeit. Ein implementierter Regler, gegebenenfalls mit einer Reglerkaskade (typischerweise aus einem Positionsregler, Geschwindigkeitsregler und Kraftregler, die hintereinander geschaltet sind), berechnet daraus die benötigten Stellgrößen (Spulenspannungen oder Spulenströme). Die Sollwerte Sn für eine Transporteinheit Tn können beispielsweise von einer übergeordneten Anlagenregelungseinheit 10 geliefert werden, beispielsweise über eine Datenkommunikationsverbindung 11, wie z.B. einen Feldbus. Anstelle von Sollwerten Sn kann eine Segmentregelungseinheit SRk-1, SRk, SRk+1 aber auch nur ein Bewegungsziel erhalten, beispielsweise eine anzufahrende Zielposition und/oder eine Zielgeschwindigkeit, aus dem die Segmentregelungseinheit SRk-1, SRk, SRk+1 ein geeignetes Bewegungsprofil, beispielsweise in Form eines Polynoms 4-ter oder 6-ter, oder auch höherer, Ordnung, berechnet, um das Bewegungsziel zu erreichen. Aus dem Bewegungsprofil können dann in jedem Zeitschritt der Regelung die Sollwerte Sn abgeleitet werden.

Für die Regelung der Bewegung einer Transporteinheit Tn ist es auch erforderlich, die aktuelle Position oder Geschwindigkeit der Transporteinheit Tn entlang des Langstators 2 zu kennen. Wie hinlänglich bekannt ist hierzu eine geeignete Positionsmessanordnung vorgesehen, beispielsweise in Form von hintereinander, entlang des Langstators 2 angeordneter Positionssensoren 4, die ein Positionssignal, beispielsweise als Istwerte für die Regelung, an die Segmentregelungseinheit SRk-1, SRk, SRk+1 oder an die Anlagenregelungseinheit 10 liefern. Geeignete Positionssensoren 4 sind beispielsweise magnetorestriktive Sensoren, magnetostriktive Sensoren, Hall Sensoren oder optische Sensoren. Äquivalent dazu könnte auch eine Geschwindigkeitsmessanordnung vorgesehen sein.

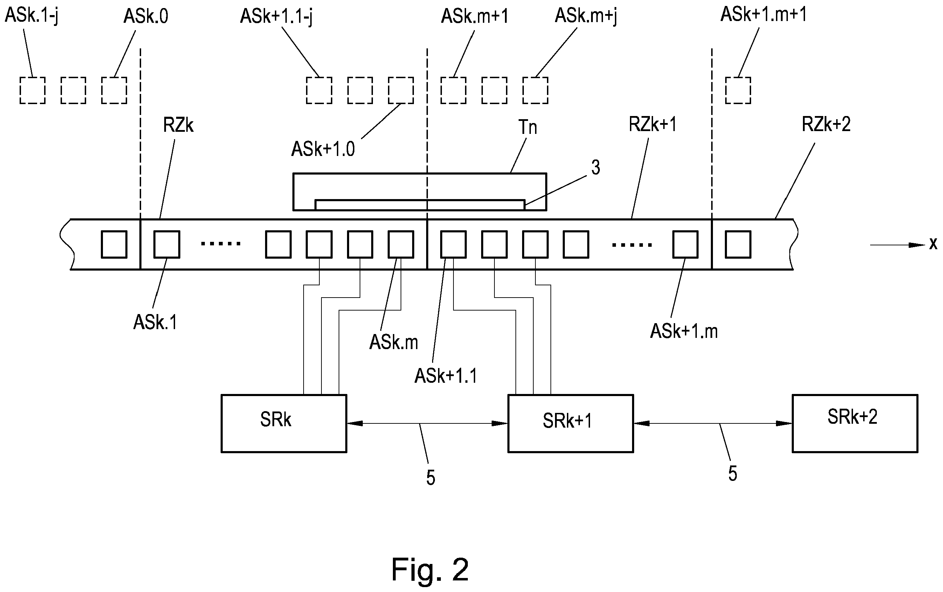

Innerhalb einer Regelungszone RZk-1, RZk, RZk+1 kann die Regelung einer Transporteinheit Tn von der zugeordneten Segmentregelungseinheit SRk-1, SRk, SRk+1 durchgeführt werden. Die jeweilige Segmentregelungseinheit SRk-1, SRk, SRk+1 berechnet die Stellgrößen der zu bestromenden Antriebsspulen ASk-1.1, ..., ASk-1.m, ASk.1, ..., ASk.m, ASk+1.1,..., ASk+1.m in der jeweiligen Regelungszone RZk-1, RZk, RZk+1. Ein Problem tritt aber auf, wenn sich die Transporteinheit Tn gerade teilweise in einer ersten Regelungszone RZk und einer in Bewegungsrichtung x nachfolgenden zweiten Regelungszone RZk+1 befindet, wie in Fig.2 dargestellt. In diesem Fall müssen also für die Bewegung der Transporteinheit Tn Antriebsspulen ASk.1, ..., ASk.m, ASk+1.1, ..., ASk+1.m der beiden benachbarten Regelungszonen RZk, RZk+1 bestromt werden. Um diesen Übergang von einer Regelungszone RZk in die nachfolgende Regelungszone RZk+1 einfach abhandeln zu können, wird gemäß der Erfindung wie folgt vorgegangen.

Eine Regelungszone RZk umfasst m Antriebsspulen ASk.1, ..., ASk.m, die entlang des Langstators 2 tatsächlich angeordnet sind, also physisch in Form von Hardware vorhanden sind. Eine Regelungszone RZk wird nun an beiden Enden um je eine Anzahl j virtueller Antriebsspulen ASk.1-j, ..., ASk.0, ASk.m+1, ..., ASk.m+j erweitert, wie in Fig.2 angedeutet. Dabei muss die Anzahl j an beiden Enden nicht unbedingt gleich sein. Die virtuellen Antriebsspulen ASk.1-j, ..., ASk.0, ASk.m+1, ..., ASk.m+j sind strichliert angedeutet. Die Erweiterung erfolgt an einem Ende in Bewegungsrichtung x und am anderen Ende entgegen der Bewegungsrichtung x. Die Anzahl j hängt dabei im Wesentlichen von der Geometrie der Transporteinheit Tn und des Langstators 2, sowie der Übergabestrategie ab und ist festgelegt oder kann als bekannt oder gegeben vorausgesetzt werden. Diese virtuellen Antriebsspulen ASk.1-j, ..., ASk.0, ASk.m+1, ..., ASk.m+j sind aber nicht real vorhanden, werden von der zugeordneten Segmentregelungseinheit SRk aber behandelt, als ob diese vorhanden wären. D.h., dass die Segmentregelungseinheit SRk nicht nur für die tatsächlich vorhandenen Antriebsspulen ASk.1, ..., ASk.m die Stellgrößen berechnet, sondern gegebenenfalls auch für die virtuellen Antriebsspulen ASk.1-j, ..., ASk.0, ASk.m+1, ..., ASk.m+j. Die Segmentregelungseinheit SRk übermittelt dann die für die virtuellen Antriebsspulen ASkm+1, ..., ASkm+j berechneten Stellgrößen über eine Datenkommunikationsleitung 5 an die in Bewegungsrichtung x nachfolgende zweite Segmentregelungseinheit SRk+1, solange die erste Segmentregelungseinheit SRk für die Regelung der Bewegung der Transporteinheit Tn zuständig ist. Die nachfolgende zweite Segmentregelungseinheit SRk+1 nutzt die übermittelten Stellgrößen der in Bewegungsrichtung x erweiterten virtuellen Antriebsspulen ASk.m+1, ..., ASk.m+j direkt, um die zu bestromenden Antriebsspulen ASk+1.1,..., ASk+1.m der zugeordneten zweiten Regelungszone RZk+1 zu bestromen. In der zweiten Segmentregelungseinheit SRk+1 erfolgt dabei vorzugsweise eine direkte Zuordnung der virtuellen Antriebsspulen ASk.m+1, ..., ASk.m+j zu den tatsächlich vorhandenen Antriebsspulen ASk+1.1, ..., ASk+1.j in der zweiten Regelungszone RZk+1.

Die nachfolgende zweite Segmentregelungseinheit SRk+1 muss daher beim Übergang der Transporteinheit Tn von einer in Bewegungsrichtung x ersten Regelungszone RZk auf die nachfolgende zweite Regelungszone RZk+1 nicht selbst die Stellgrößen der zugehörigen Antriebsspulen ASk+1.1,..., ASk+1.j berechnen, sondern erhält diese von der in Bewegungsrichtung x vorherigen ersten Segmentregelungseinheit SRk. Erst wenn die Zuständigkeit für die Regelung von der ersten Segmentregelungseinheit SRk auf die nachfolgende zweite Segmentregelungseinheit SRk+1 übergeht, berechnet diese die Stellgrößen der zugeordneten Antriebsspulen ASk+1.1, ..., ASk+1.j in der zweiten Regelungszone RZk+1. Zusätzlich berechnet die zweite Segmentregelungseinheit SRk+1 dann aber auch die Stellgrößen der entgegen der Bewegungsrichtung x erweiterten virtuellen Antriebsspulen ASk+1.0, ..., ASk+1.1-j in der vorherigen Regelungszone RZk. Die Segmentregelungseinheit SRk+1 überträgt die berechneten Stellgrößen dieser virtuellen Antriebsspulen ASk+1.0, ..., ASk+1.1-j an die vorherige erste Segmentregelungseinheit SRk, die diese Stellgrößen zum Bestromen der zugeordneten Antriebsspulen ASk.m-j, ..., ASk.m in der ersten Regelungszone RZk nutzt. Damit muss auch im Übergangsbereich von einer ersten Regelungszone RZk auf eine in Bewegungsrichtung nachfolgende zweite Regelungszone RZk+1 immer nur eine Segmentregelungseinheit SRk die Stellgrößen der Antriebsspulen ASk.1, ..., ASk.m, ASk+1.1,..., ASk+1.m berechnen, die für die Bewegung der Transporteinheit Tn benötigt werden. Auf diese Weise müssen über die Datenkommunikationsleitung 5 keine Positionsmesswerte und keine Vortriebskraft übergeben werden, wie bisher im Stand der Technik üblich, sondern es können direkt die Stellgrößen für die Antriebsspulen, ..., ASk.m, ASk+1.1,..., ASk+1.m übertragen werden, die dann direkt zum Bestromen verwendet werden können. Folglich kann beim Übergang einer Transporteinheit Tn von einer ersten Regelungszone RZk auf eine nachfolgende Regelungszone RZk+1 auch Rechenaufwand in den Segmentregelungseinheiten SRk, SRk+1 eingespart werden.

Nachdem in einer Regelungszone RZk, RZk+1 auch mehrere Transporteinheiten Tn gleichzeitig bewegt werden können, kann es auch vorkommen, dass eine erste Segmentregelungseinheit SRk die Stellgrößen für virtuelle Antriebsspulen ASk. 1-j, ..., ASk.0 und ASk,m+1, ASk,m+j an beiden Enden der zugeordneten Regelungszone RZk ermittelt und an die jeweilige benachbarte zweite Segmentregelungseinheit SRk-1 und SRk+1 sendet. Umgekehrt kann eine Segmentregelungseinheit SRk die Informationen der virtuellen Antriebsspulen zum einen von einer in Bewegungsrichtung davor liegenden Segmentregelungseinheit SRk-1, andererseits aber auch die Informationen der virtuellen Antriebsspulen der Segmentregelungseinheit von einer in Bewegungsrichtung x danach liegenden Segmentregelungseinheit SRk+1 erhalten.

Die Datenkommunkationsleitung 5 ist vorzugsweise eine leistungsfähige direkte Datenverbindung zwischen zwei Segmentregelungseinheiten SRk, SRK+1, da darüber gegebenenfalls in jeden Zeitschritt der Regelung, typischerweise im Bereich von einigen zehn bis einigen hundert Mikrosekunden, beispielsweise 50µs, Stellgrößen zu übertragen sind. Falls die Datenkommunikationsverbindung 11 ausreichend leistungsfähig ist, kann auch diese als Datenkommunikationsleitung 5 verwendet werden.

Falls der Langstatorlinearmotor 1 mit einem p-Phasensystem realisiert ist, meistens ein 3-Phasensystem mit den Phasen U, V, W analog zu einem rotativen Elektromotor, dann kann es auch ausreichen, wenn aufgrund des bekannten Phasenbezugs der p-Phasen weniger Stellgrößen übermittelt werden. Wenn einer Transporteinheit Tn eines Langstatorlinearmotors 1 mit einem 3-Phasensystem beispielsweise mit sechs Antriebsspulen bewegt wird, können die sechs Antriebsspulen z.B. mit U, V, W, -U, -V, -W bestromt werden. Damit würde es ausreichen, wenn nur insgesamt drei Stellgrößen, nämlich für U, V, W, übertragen werden, weil die anderen damit direkt in Zusammenhang stehen. Der Schritt des Übermittelns der Stellgrößen von virtuellen Antriebsspulen an eine Segmentregelungseinheit muss damit nicht immer die Stellgrößen aller benötigten virtuellen Antriebsspulen bedeuten. Es müssen folglich nur die benötigten Stellgrößen für die benötigten virtuellen Antriebsspulen übermittelt werden, was die Datenkommunikation über die Datenkommunikationsleitung 5 entlastet.

Wann die Zuständigkeit für die Regelung wechselt, kann dabei beliebig festgelegt werden. Hierfür wird eine geeignete Übergabestrategie festgelegt. Es wäre beispielsweise denkbar, dass die erste Segmentregelungseinheit SRk die Kontrolle über die Regelung behält, bis sich die Transporteinheit Tn vollständig in der zweiten Segmentregelungseinheit SRk+1 befindet. In diesem Fall müssen somit so viele virtuelle Antriebsspulen ASkm+1, ..., ASkm+j vorhanden sein, wie die Anzahl der für die Bewegung der Transporteinheit Tn benötigten Antriebsspulen ASk-11, ..., ASk-1m, ASk1, ..., ASkm, ASk+11, ..., ASk+1m.

Vorteilhaft ist eine Segmentregelungseinheit SRk solange für die Regelung zuständig, solange sich die Mitte der Anordnung der Antriebsmagnete 3 (in Bewegungsrichtung x gesehen) der Transporteinheit Tn in der zugeordneten Regelungszone RZk befindet. Nachdem die Position der Transporteinheit Tn erfasst wird und damit bekannt ist und man natürlich auch die Geometrie der Anordnung der Antriebsmagnete 3 der Transporteinheit Tn kennt, kann das laufend in den Segmentregelungseinheiten SRk, SRk+1 überprüft werden. In diesem Fall benötigt man folglich so viele virtuelle Antriebsspulen ASkm+1, ..., ASkm+j, wie die Hälfte der Anzahl der für die Bewegung der Transporteinheit Tn benötigten Antriebsspulen ASk-11, ..., ASk- m, ASk1, ..., ASkm, ASk+11, ..., ASk+1m. Daraus ist ersichtlich, dass die Anzahl j der virtuellen Antriebsspulen auch wesentlich von der Länge der Anordnung der Antriebsmagnete der Transporteinheit Tn und von der Übergabestrategie abhängt. Es kann auch sein, dass nicht nur Antriebsspulen zum Bewegen der Transporteinheit Tn verwendet werden, die von der Anordnung der Antriebsmagnete 3 überdeckt wird, sondern auch eine Anzahl von weiteren Antriebsspulen in Bewegungsrichtung x vor und hinter der Anordnung der Antriebsmagnete. Auch das muss natürlich bei der Bestimmung der benötigten Anzahl j berücksichtigt werden.

Wenn die Zuständigkeit für die Regelung wechselt, gegebenenfalls auch schon etwas vorher, können über die Datenkommunikationsleitung 5 natürlich auch noch weitere Daten, wie beispielsweise ein Bewegungsprofil, an die nachfolgende zweite Segmentregelungseinheit SRk+1, oder umgekehrt auf die vorherige erste Segmentregelungseinheit SRk, übertragen werden.

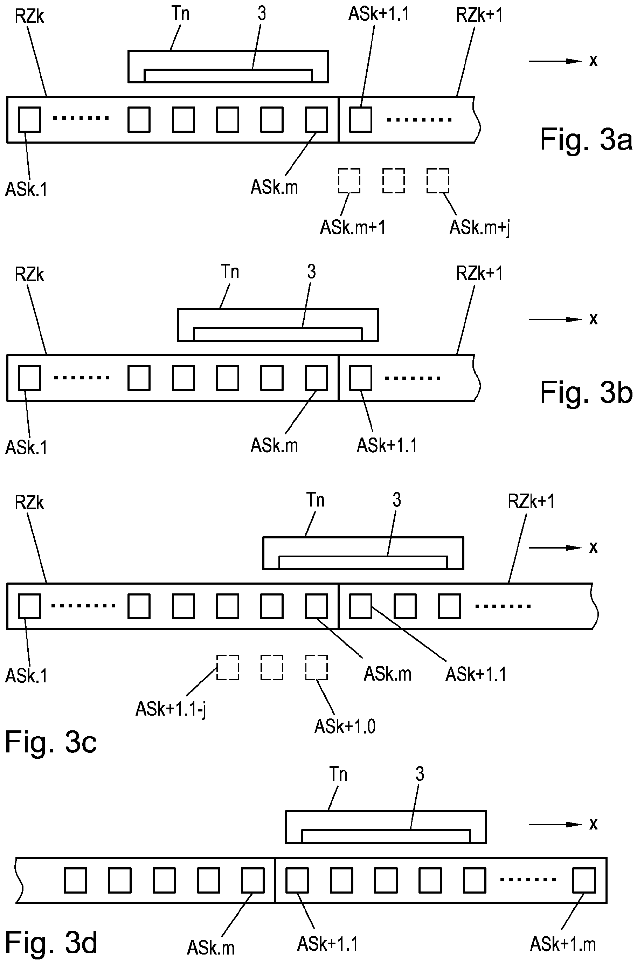

Das erfindungsgemäße Vorgehen wird nachfolgend noch im Detail anhand der Fig.3a-3d beschrieben.

In Fig.3a befindet sich die Transporteinheit Tn vollständig in einer ersten Regelungszone RZk und bewegt sich in Bewegungsrichtung x. Die der Regelungszone RZk zugeordnete Segmentregelungseinheit SRk (der Einfachheit halber nicht mehr dargestellt) berechnet die Stellgrößen für die zu bestromenden Antriebsspulen ASk.1, ..., ASk.m in der Regelungszone RZk, um die Transporteinheit Tn zu bewegen.

In Fig.3b hat die Transporteinheit Tn die Grenze zwischen zwei in Bewegungsrichtung x benachbarten Regelungszone RZk, RZk+1 überfahren und befindet sich nun teilweise in der ersten Regelungszone RZk und teilweise in der nachfolgenden zweiten Regelungszone RZk+1. Die für die Regelung der Transporteinheit Tn zuständige erste Segmentregelungseinheit SRk berechnet nun nicht nur die Stellgrößen der benötigten Antriebsspulen ASk.1, ..., ASk.m der zugeordneten ersten Regelungszone RZk, sondern auch die Stellgrößen für die benötigten virtuellen Antriebsspulen ASk.m+1, ..., ASk.m+j. Wieviele der j virtuellen Antriebsspulen benötigt werden, hängt natürlich davon ab, wie weit die Transporteinheit Tn in die nachfolgende Regelungszone RZk+1 eingefahren ist. Die Stellgrößen der virtuellen Antriebsspulen ASk.m+1, ..., ASk.m+j werden über die Datenkommunikationsleitung 5 an die nachfolgende Segmentregelungseinheit SRk+1 übertragen, die diese direkt zum Bestromen der entsprechenden, tatsächlich vorhandenen Antriebsspulen ASk+1.1, ..., ASk+1.1+j der zugeordneten Regelungszone RZk+1 verwendet. Hierzu kann eine direkte Zuordnung von virtueller Antriebsspule ASk.m+1, ..., ASk.m+j zu Antriebsspule ASk+1.1, ..., ASk+1.1+j in der Regelungszone RZk+1 vorgesehen sein, beispielsweise ASk.m+1 -> ASk+1.1, ..., ASk.m+j -> ASk+1.1+j. Die Zuordnung ist damit ausgesprochen einfach zu realisieren.

In Fig.3c wird angenommen, dass die Zuständigkeit für die Regelung der Bewegung der Transporteinheit Tn auf die nachfolgenden Segmentregelungseinheit SRk+1 übergegangen ist, beispielsweise weil die Mitte der Transporteinheit Tn oder der Anordnung der Antriebsmagnete 3 der Transporteinheit Tn (in Bewegungsrichtung x) nun in der nachfolgenden zweiten Regelungszone RZk+1 liegt. Diese zweite Segmentregelungseinheit SRk+1 berechnet nun nicht nur die Stellgrößen der benötigten Antriebsspulen ASk+1.1,..., ASk+1.m der zugeordneten Regelungszone RZk+1, sondern auch die Stellgrößen für die benötigten, in Bewegungsrichtung davor liegenden virtuellen Antriebsspulen ASk+1.0, ..., ASk+1.1-j. Wieviele virtuelle Antriebsspulen ASk+1.0, ..., ASk+1.1-j benötigt werden, hängt natürlich wieder davon ab, wie weit die Transporteinheit Tn in die nachfolgende Regelungszone RZk+1 eingefahren ist. Die Stellgrößen der virtuellen Antriebsspulen ASk+1.0, ..., ASk+1.1-j werden über die Datenkommunikationsleitung 5 an die vorherige Segmentregelungseinheit SRk übertragen, die diese zum Bestromen der tatsächlich vorhandenen Antriebsspulen ASk.m, ..., ASk.m-j der zugeordneten Regelungszone RZk verwendet. Auch hier ist natürlich vorzugsweise wieder eine Zuordnung zwischen virtuellen Antriebsspulen ASk+1.0, ..., ASk+1.1-j und Antriebsspulen ASk.m, ..., ASk.m-j in der ersten Regelungszone RZk vorgesehen.

In Fig.3d ist die Transporteinheit Tn letztendlich vollständig in die Regelungszone RZk+1 eingefahren, sodass für die Bewegung der Transporteinheit Tn nur mehr Antriebsspulen ASk+1.1, ..., ASk+1.m in der zweiten Regelungszone RZk+1 bestromt werden müssen. Die Kontrolle darüber hat die zugeordnete zweite Segmentregelungseinheit SRk+1. Für die Transporteinheit Tn werden nun bis zur nächsten Überfahrt einer Grenze zwischen Regelungszonen RZ keine virtuellen Antriebsspulen mehr benötigt.

In umgekehrter Bewegungsrichtung passiert natürlich dasselbe in umgekehrter Richtung.

## Patentansprüche

1. Verfahren zum Bewegen einer Transporteinheit (Tn) mit einer Anordnung von Antriebsmagneten (3) in Bewegungsrichtung (x) entlang eines Langstators (2) eines Langstatorlinearmotors (1), wobei der Langstator (2) in zumindest eine erste Regelungszone (RZk) mit einer Mehrzahl von Antriebsspulen (ASk.1, ..., ASk.m) und eine zweite Regelungszone (RZk+1) mit einer Mehrzahl von Antriebsspulen (ASk+1.1, ..., ASk+1.m) aufgeteilt wird, wobei die erste Regelungszone (RZk) von einer ersten Segmentregelungseinheit (SRk) und die zweite Regelungszone (RZk+1) von einer zweiten Segmentregelungseinheit (SRk+1) geregelt wird, indem in einer Regelungszone (RZk, RZk+1) die zugeordnete Segmentregelungseinheit (SRk, SRk+1) die Stellgrößen zum Bestromen der für das Bewegen der Transporteinheit (Tn) benötigten Antriebsspulen (ASk.1, ..., ASk.m, ASk+1.1, ..., ASk+1.m) in der Regelungszone (RZk, RZk+1) berechnet, solange zum Bewegen der Transporteinheit (Tn) ausschließlich Antriebsspulen (ASk.1, ..., ASk.m, ASk+1.1, ..., ASk+1.m) einer Regelungszone (RZk, RZk+1) bestromt werden, **dadurch gekennzeichnet, dass** bei Übergang der Transporteinheit (Tn) von der in Bewegungsrichtung (x) ersten Regelungszone (RZk) auf die nachfolgende zweite Regelungszone (RZk+1), wobei zum Bewegen der Transporteinheit (Tn) Antriebsspulen (ASk.1, ..., ASk.m, ASk+1.1, ..., ASk+1.m) der ersten Regelungszone (RZk) und der zweiten Regelungszone (RZk+1) bestromt werden, zuerst die erste Segmentregelungseinheit (SRk) für die Regelung der Bewegung der Transporteinheit (Tn) zuständig bleibt und die erste Regelungszone (RZk) in Bewegungsrichtung (x) um eine Anzahl (j) virtueller Antriebsspulen (ASk.m+1, ..., ASk.m+j) erweitert wird und die der ersten Regelungszone (RZk) zugeordnete erste Segmentregelungseinheit (SRk) auch die benötigten Stellgrößen für die benötigten virtuellen Antriebsspulen (ASk.m+1, ..., ASk.m+j) berechnet, **dass** die erste Segmentregelungseinheit (SRk) die benötigten Stellgrößen für die benötigten virtuellen Antriebsspulen (ASk.m+1, ..., ASk.m+j) an die der zweiten Regelungszone (RZk+1) zugeordneten zweiten Segmentregelungseinheit (SRk+1) übermittelt **und dass** die zweite Segmentregelungseinheit (SRk+1) die übermittelten Stellgrößen für die benötigten virtuellen Antriebsspulen (ASk.m+1, ..., ASk.m+j) zum Bestromen der für das Bewegen der Transporteinheit (Tn) benötigten Antriebsspulen (ASk+1.1, ..., ASk+1.m) der zweiten Regelungszone (RZk+1) verwendet.

2. Verfahren nach Anspruch 1, **dadurch gekennzeichnet, dass** die zweite Segmentregelungseinheit (SRk+1) die virtuellen Antriebsspulen (ASk.m+1, ..., ASk.m+j) der ersten Regelungszone (RZk) Antriebsspulen (ASk+1.1, ..., ASk+1.m) der zweiten Regelungszone (RZk+1) zuordnet und die erhaltenen Stellgrößen der virtuellen Antriebsspulen (ASk.m+1, ..., ASk.m+j) zum Bestromen der zugeordneten Antriebsspulen (ASk+1.1, ..., ASk+1.m) der zweiten Regelungszone (RZk+1) verwendet.

3. Verfahren nach Anspruch 1 oder 2, **dadurch gekennzeichnet, dass** ab einem definierten Zeitpunkt des Übergangs die Zuständigkeit für die Regelung der Bewegung der Transporteinheit (Tn) auf die zweite Segmentregelungseinheit (SRk+1) der zweiten Regelungszone (RZk+1) wechselt und die zweite Regelungszone (RZk+1) entgegen der Bewegungsrichtung (x) um eine Anzahl (j) virtueller Antriebsspulen (ASk+1.0, ..., ASk+1.1-j) erweitert wird und die der zweiten Regelungszone (RZk+1) zugeordnete zweite Segmentregelungseinheit (SRk+1) auch die Stellgrößen für die benötigten virtuellen Antriebsspulen (ASk+1.0, ..., ASk+1.1-j) berechnet, **dass** die zweite Segmentregelungseinheit (SRk+1) die benötigten Stellgrößen für die benötigten virtuellen Antriebsspulen (ASk+1.0, ..., ASk+1.1-j) an die der ersten Regelungszone (RZk) zugeordnete erste Segmentregelungseinheit übermittelt **und dass** die erste Segmentregelungseinheit (SRk) die übermittelten Stellgrößen für die benötigten virtuellen Antriebsspulen (ASk+1.0, ..., ASk+1.1-j) zum Bestromen der für das Bewegen der Transporteinheit (Tn) benötigten Antriebsspulen (ASk.1, ..., ASk.m) der ersten Regelungszone (RZk) verwendet.

4. Verfahren nach Anspruch 3, **dadurch gekennzeichnet, dass** die erste Segmentregelungseinheit (SRk) die virtuellen Antriebsspulen (ASk+1.0, ..., ASk+1.1-j) der zweiten Regelungszone (RZk+1) Antriebsspulen (ASk.1, ..., ASk.m) der ersten Regelungszone (RZk) zuordnet und die erhaltenen Stellgrößen der virtuellen Antriebsspulen (ASk+1.0, ..., ASk+1.1-j) zum Bestromen der zugeordneten Antriebsspulen (ASk.1, ..., ASk.m) der ersten Regelungszone (RZk) verwendet.

5. Verfahren nach Anspruch 3, **dadurch gekennzeichnet, dass** die Zuständigkeit von der ersten Segmentregelungseinheit (SRk) auf die zweite Segmentregelungseinheit (SRk+1) wechselt, wenn die Mitte der Anordnung der Antriebsmagnete (3) der Transporteinheit (Tn) von der ersten Regelungszone (RZk) auf die zweite Regelungszone (RZk+1) übergeht.

6. Langstatorlinearmotor mit einer Mehrzahl von Antriebsspulen (ASk.1, ..., ASk.m, ASk+1.1, ..., ASk+1.m), die einen Langstator (2) des Langstatorlinearmotors (1) ausbilden, entlang dem eine Transporteinheit (Tn) mit einer Anordnung von Antriebsmagneten (3) in Bewegungsrichtung (x) bewegbar ist, wobei der Langstator (2) in zumindest eine erste Regelungszone (RZk) mit einer Mehrzahl von Antriebsspulen (ASk.1, ..., ASk.m) und eine zweite Regelungszone (RZk+1) mit einer Mehrzahl von Antriebsspulen (ASk+1.1, ..., ASk+1.m) aufgeteilt ist, wobei der ersten Regelungszone (RZk) eine erste Segmentregelungseinheit (SRk) zum Regeln der Antriebsspulen (ASk.1, ..., ASk.m) der ersten Regelungszone (RZk) zugeordnet ist und der zweiten Regelungszone (RZk+1) eine zweite Segmentregelungseinheit (SRk+1) zum Regeln der Antriebsspulen (ASk+1.1, ..., ASk+1.m) der zweiten Regelungszone (RZk+1) zugeordnet ist, indem in einer Regelungszone (RZk, RZk+1) die zugeordnete Segmentregelungseinheit (SRk, SRk+1) die Stellgrößen zum Bestromen der für das Bewegen der Transporteinheit (Tn) benötigten Antriebsspulen (ASk.1, ..., ASk.m, ASk+1.1, ..., ASk+1.m) in einer Regelungszone (RZk, RZk+1) berechnet, solange sich die Transporteinheit (Tn) ausschließlich in einer Regelungszone (RZk, RZk+1) befindet, **dadurch gekennzeichnet, dass** bei Übergang der Transporteinheit (Tn) von der in Bewegungsrichtung (x) ersten Regelungszone (RZk) auf die nachfolgende zweite Regelungszone (RZk+1), wobei zum Bewegen der Transporteinheit (Tn) Antriebsspulen (ASk.1, ..., ASk.m, ASk+1.1, ..., ASk+1.m) der ersten Regelungszone (RZk) und der zweiten Regelungszone (RZk+1) zu bestromen sind, zuerst die erste Segmentregelungseinheit (SRk) für die Regelung der Bewegung der Transporteinheit (Tn) zuständig bleibt und die erste Segmentregelungseinheit (SRk) Stellgrößen für eine Anzahl (j) virtueller Antriebsspulen (ASk.m+1, ..., ASk.m+j), die in Bewegungsrichtung (x) virtuell an die erste Regelungszone (SRk) anschließen, berechnet, **dass** eine Datenkommunikationsleitung (5) vorgesehen ist, die die erste Segmentregelungseinheit (SRk) mit der zweiten Segmentregelungseinheit (SRk+1) verbindet und die erste Segmentregelungseinheit (SRk) die benötigten Stellgrößen für die benötigten virtuellen Antriebsspulen (ASk.m+1, ..., ASk.m+j) an die zweite Segmentregelungseinheit (SRk+1) übermittelt **und dass** die zweite Segmentregelungseinheit (SRk+1) mit den übermittelten Stellgrößen für die benötigten virtuellen Antriebsspulen (ASk.m+1, ..., ASk.m+j) die für das Bewegen der Transporteinheit (Tn) benötigten Antriebsspulen (ASk+1.1, ..., ASk+1.m) der zweiten Regelungszone (RZk+1) bestromt.

7. Langstatorlinearmotor nach Anspruch 6, **dadurch gekennzeichnet, dass** die zweite Segmentregelungseinheit (SRk+1) die virtuellen Antriebsspulen (ASk.m+1, ..., ASk.m+j) der ersten Regelungszone (RZk) Antriebsspulen (ASk+1.1, ..., ASk+1.m) der zweiten Regelungszone (RZk+1) zuordnet und die erhaltenen Stellgrößen der virtuellen Antriebsspulen (ASk.m+1, ..., ASk.m+j) zum Bestromen der zugeordneten Antriebsspulen (ASk+1.1, ..., ASk+1.m) der zweiten Regelungszone (RZk+1) verwendet.

8. Langstatorlinearmotor nach Anspruch 6 oder 7, **dadurch gekennzeichnet, dass** ab einem definierten Zeitpunkt des Übergangs die Zuständigkeit für die Regelung der Bewegung der Transporteinheit (Tn) auf die zweite Segmentregelungseinheit (SRk+1) der zweiten Regelungszone (RZk+1) wechselt und die zweite Segmentregelungseinheit (SRk+1) Stellgrößen für eine Anzahl (j) virtueller Antriebsspulen (ASk+1.0, ..., ASk+1.1-j), die in Bewegungsrichtung (x) virtuell vor der zweiten Regelungszone (RZk+1) liegen, berechnet, **dass** die zweite Segmentregelungseinheit (SRk+1) die benötigten Stellgrößen für die benötigten virtuellen Antriebsspulen (ASk+1.0, ..., ASk+1.1-j) an die erste Segmentregelungseinheit (SRk) übermittelt **und dass** die erste Segmentregelungseinheit (SRk) mit den übermittelten Stellgrößen für die benötigten virtuellen Antriebsspulen (ASk+1.0, ..., ASk+1.1-j) die für das Bewegen der Transporteinheit (Tn) benötigten Antriebsspulen (ASk.1, ..., ASk.m) der erste Regelungszone (RZk) bestromt.

9. Langstatorlinearmotor nach Anspruch 8, **dadurch gekennzeichnet, dass** die erste Segmentregelungseinheit (SRk) die virtuellen Antriebsspulen (ASk+1.0, ..., ASk+1.1-j) der zweiten Regelungszone (RZk+1) Antriebsspulen (ASk.1, ..., ASk.m) der ersten Regelungszone (RZk) zuordnet und die erhaltenen Stellgrößen der virtuellen Antriebsspulen (ASk+1.0, ..., ASk+1.1-j) zum Bestromen der zugeordneten Antriebsspulen (ASk.1, ..., ASk.m) der ersten Regelungszone (RZk) verwendet.

10. Langstatorlinearmotor nach Anspruch 8, **dadurch gekennzeichnet, dass** die Zuständigkeit von der ersten Segmentregelungseinheit (SRk) auf die zweite Segmentregelungseinheit (SRk+1) wechselt, wenn die Mitte der Anordnung der Antriebsmagnete (3) der Transporteinheit (Tn) von der ersten Regelungszone (RZk) auf die zweite Regelungszone (RZk+1) übergeht.

## Claims

1. A method for moving a transport unit (Tn) comprising an arrangement of drive magnets (3) in a movement direction (x) along a long stator (2) of a long stator linear motor (1), wherein the long stator (2) being divided into at least a first control zone (RZk) comprising a plurality of drive coils (ASk.1, ..., ASk.m) and a second control zone (RZk+1) comprising a plurality of drive coils (ASk+1.1, ..., ASk+1.m), wherein the first control zone (RZk) being controlled by a first segment control unit (SRk) and the second control zone (RZk+1) being controlled by a second segment control unit (SRk+1) in that in a control zone (RZk, RZk+1) the assigned segment control unit (SRk, SRk+1) calculates the manipulated variables for energizing the drive coils (ASk.1, ..., ASk.m, ASk+1.1, ..., ASk+1.m) in the control zone (RZk, RZk+1) that are required for moving the transport unit (Tn), as long as, in order to move the transport unit (Tn), exclusively drive coils (ASk.1, ..., ASk.m, ASk+1.1, ..., ASk+1.m) in one control zone (RZk, RZk+1) are energized, **characterized in that,** during the transition of the transport unit (Tn) from the first control zone (RZk), in the movement direction (x), to the following second control zone (RZk+1), wherein drive coils (ASk.1, ..., ASk.m, ASk+1.1, ..., ASk+1.m) of the first control zone (RZk) and of the second control zone (RZk+1) being energized in order to move the transport unit (Tn), initially the first segment control unit (SRk) remains responsible for controlling the movement of the transport unit (Tn) and the first control zone (RZk) is extended, in the movement direction (x), by a number (j) of virtual drive coils (ASk.m+1, ..., ASk.m+j) and the first segment control unit (SRk) that is assigned to the first control zone (RZk) also calculates the necessary manipulated variables for the required virtual drive coils (ASk.m+1, ..., ASk.m+j), **in that** the first segment control unit (SRk) transmits the necessary manipulated variables for the required virtual drive coils (ASk.m+1, ..., ASk.m+j) to the second segment control unit (SRk+1) that is assigned to the second control zone (RZk+1), **and in that** the second segment control unit (SRk+1) uses the transmitted manipulated variables for the required virtual drive coils (ASk.m+1, ..., ASk.m+j) in order to energize the drive coils (ASk+1.1, ..., ASk+1.m) of the second control zone (RZk+1) that are required for moving the transport unit (Tn).

2. The method according to claim 1, **characterized in that** the second segment control unit (SRk+1) assigns the virtual drive coils (ASk.m+1, ..., ASk.m+j) of the first control zone (RZk) to drive coils (ASk+1.1, ..., ASk+1.m) of the second control zone (RZk+1), and uses the received manipulated variables of the virtual drive coils (ASk.m+1, ..., ASk.m+j) for energizing the assigned drive coils (ASk+1.1, ..., ASk+1.m) of the second control zone (RZk+1).

3. The method according to claim 1 or 2, **characterized in that,** after a defined time point of the transition, the responsibility for controlling the movement of the transport unit (Tn) switches to the second segment control unit (SRk+1) of the second control zone (RZk+1) and the second control zone (RZk+1) is extended, counter to the movement direction (x), by a number (j) of virtual drive coils (ASk+1.0, ..., ASk+1.1-j) and the second segment control unit (SRk+1) that is assigned to the second control zone (RZk+1) also calculates the manipulated variables for the required virtual drive coils (ASk+1.0, ..., ASk+1.1-j), **in that** the second segment control unit (SRk+1) transmits the necessary manipulated variables for the required virtual drive coils (ASk+1.0, ..., ASk+1.1-j) to the first segment control unit that is assigned to the first control zone (RZk), **and in that** the first segment control unit (SRk) uses the transmitted manipulated variables for the required virtual drive coils (ASk+1.0, ..., ASk+1.1-j) in order to energize the drive coils (ASk.1, ..., ASk.m) of the first control zone (RZk) that are required for moving the transport unit (Tn).

4. The method according to claim 3, **characterized in that** the first segment control unit (SRk) assigns the virtual drive coils (ASk+1.0, ..., ASk+1.1-j) of the second control zone (RZk+1) to drive coils (ASk.1, ..., ASk.m) of the first control zone (RZk) and uses the received manipulated variables of the virtual drive coils (ASk+1.0, ..., ASk+1.1-j) for energizing the assigned drive coils (ASk.1, ..., ASk.m) of the first control zone (RZk).

5. The method according to claim 3, **characterized in that** the responsibility switches from the first segment control unit (SRk) to the second segment control unit (SRk+1) when the center of the arrangement of the drive magnets (3) of the transport unit (Tn) transitions from the first control zone (RZk) to the second control zone (RZk+1).

6. Long stator linear motor comprising a plurality of drive coils (ASk.1, ..., ASk.m, ASk+1.1, ..., ASk+1.m) that form a long stator (2) of the long stator linear motor (1), along which a transport unit (Tn) comprising an arrangement of drive magnets (3) can be moved in a movement direction (x), wherein the long stator (2) is divided into at least a first control zone (RZk) comprising a plurality of drive coils (ASk.1, ..., ASk.m) and a second control zone (RZk+1) comprising a plurality of drive coils (ASk+1.1, ..., ASk+1.m), wherein a first segment control unit (SRk) for controlling the drive coils (ASk.1, ..., ASk.m) of the first control zone (RZk) is assigned to the first control zone (RZk) and a second segment control unit (SRk+1) for controlling the drive coils (ASk+1.1, ..., ASk+1.m) of the second control zone (RZk+1) is assigned to the second control zone (RZk+1), in that in a control zone (RZk, RZk+1) the assigned segment control unit (SRk, SRk+1) calculates the manipulated variables for energizing the drive coils (ASk.1, ..., ASk.m, ASk+1.1, ..., ASk+1.m) in the control zone (RZk, RZk+1) that are required for moving the transport unit (Tn) as long as the transport unit (Tn) is located exclusively in one control zone (RZk, RZk+1), **characterized in that,** during the transition of the transport unit (Tn) from the first control zone (RZk), in the movement direction (x), to the following second control zone (RZk+1), wherein drive coils (ASk.1, ..., ASk.m, ASk+1.1, ..., ASk+1.m) of the first control zone (RZk) and of the second control zone (RZk+1) are to be energized in order to move the transport unit (Tn), initially the first segment control unit (SRk) remains responsible for controlling the movement of the transport unit (Tn) and the first segment control unit (SRk) calculates manipulated variables for a number (j) of virtual drive coils (ASk.m+1, ..., ASk.m+j) that virtually adjoin the first control zone (SRk) in the movement direction (x), **and in that** a data communication line (5) is provided which connects the first segment control unit (SRk) to the second segment control unit (SRk+1) and transmits the necessary manipulated variables for the required virtual drive coils (ASk.m+1, ..., ASk.m+j) to the second segment control unit (SRk+1), **and in that** the second segment control unit (SRk+1) uses the transmitted manipulated variables for the required virtual drive coils (ASk.m+1, ..., ASk.m+j) in order to energize the drive coils (ASk+1.1, ..., ASk+1.m) of the second control zone (RZk+1) that are required for moving the transport unit (Tn).

7. The long stator linear motor according to claim 6, **characterized in that** the second segment control unit (SRk+1) assigns the virtual drive coils (ASk.m+1, ..., ASk.m+j) of the first control zone (RZk) to drive coils (ASk+1.1, ..., ASk+1.m) of the second control zone (RZk+1), and uses the received manipulated variables of the virtual drive coils (ASk.m+1, ..., ASk.m+j) for energizing the assigned drive coils (ASk+1.1, ..., ASk+1.m) of the second control zone (RZk+1).

8. The long stator linear motor according to claim 6 or 7, **characterized in that,** after a defined time point of the transition, the responsibility for controlling the movement of the transport unit (Tn) switches to the second segment control unit (SRk+1) of the second control zone (RZk+1), and the second segment control unit (SRk+1) calculates manipulated variables for a number (j) of virtual drive coils (ASk+1.0, ..., ASk+1.1-j) that are located virtually in front of the second control zone (RZk+1) in the movement direction (x), **in that** the second segment control unit (SRk+1) transmits the necessary manipulated variables for the required virtual drive coils (ASk+1.0, ..., ASk+1.1-j) to the first segment control unit (SRk), **and in that** the first segment control unit (SRk) uses the transmitted manipulated variables for the required virtual drive coils (ASk+1.0, ..., ASk+1.1-j) in order to energize the drive coils (ASk.1, ..., ASk.m) of the first control zone (RZk) that are required for moving the transport unit (Tn).

9. The long stator linear motor according to claim 8, **characterized in that** the first segment control unit (SRk) assigns the virtual drive coils (ASk+1.0, ..., ASk+1.1-j) of the second control zone (RZk+1) to drive coils (ASk.1, ..., ASk.m) of the first control zone (RZk), and uses the received manipulated variables of the virtual drive coils (ASk+1.0, ..., ASk+1.1-j) for energizing the assigned drive coils (ASk. 1, ..., ASk.m) of the first control zone (RZk).

10. The long stator linear motor according to claim 8, **characterized in that** the responsibility switches from the first segment control unit (SRk) to the second segment control unit (SRk+1) when the center of the arrangement of the drive magnets (3) of the transport unit (Tn) transitions from the first control zone (RZk) to the second control zone (RZk+1).

## Revendications

1. Procédé de déplacement d'une unité de transport (Tn) comportant un ensemble d'aimants d'entraînement (3) dans la direction de déplacement (x) le long d'un stator long (2) d'un moteur linéaire à stator long (1), dans lequel le stator long (2) est divisé en au moins une première zone de régulation (RZk) comportant une pluralité de bobines d'entraînement (ASk.1, ..., ASk.m) et une seconde zone de régulation (RZk+1) comportant une pluralité de bobines d'entraînement (ASk+1.1, ..., ASk+1.m), dans lequel la première zone de régulation (RZk) est régulée par une première unité de régulation de segment (SRk) et la seconde zone de régulation (RZk+1) est régulée par une seconde unité de régulation de segment (SRk+1), dans lequel, dans une zone de régulation (RZk, RZk+1), l'unité de régulation de segment (SRk, SRk+1) associée calcule les grandeurs de réglage destinées à alimenter en énergie les bobines d'entraînement (ASk.1, ..., ASk.m, ASk+1.1, ..., ASk+1.m) requises pour le déplacement de l'unité de transport (Tn) dans la zone de régulation (RZk, RZk+1), tant que seules des bobines d'entraînement (ASk.1, ..., ASk+1.m, ASk+1.1, ..., ASk+1.m) d'une zone de régulation (RZk, RZk+1) sont alimentées en énergie pour déplacer l'unité de transport (Tn), **caractérisé en ce que**, lors du passage de l'unité de transport (Tn) de la première zone de régulation (RZk) dans la direction de déplacement (x) à la seconde zone de régulation (RZk+1) suivante, des bobines d'entraînement (ASk.1, ..., ASk.m, ASk+1.1, ..., ASk+1.m) de la première zone de régulation (RZk) et de la seconde zone de régulation (RZk+1) étant alimentées en énergie pour le déplacement de l'unité de transport (Tn), d'abord la première unité de régulation de segment (SRk) reste responsable de la régulation du déplacement de l'unité de transport (Tn) et la première zone de régulation (RZk) est élargie dans la direction de déplacement (x) par un nombre (j) de bobines d'entraînement virtuelles (ASk.m+1, ..., ASk.m+j) dans la direction de déplacement (x) et la première unité de régulation de segment (SRk) associée à la première zone de régulation (RZk) calcule également les grandeurs de réglage requises pour les bobines d'entraînement virtuelles requises (ASk.m+1, ..., ASk.m+j), **en ce que** la première unité de régulation de segment (SRk) transmet les grandeurs de réglage requises pour les bobines d'entraînement virtuelles requises (ASk.m+1, ..., ASk.m+j) à la seconde unité de régulation de segment (SRk+1) associée à la seconde zone de régulation (RZk+1), et **en ce que** la seconde unité de régulation de segment (SRk+1) utilise les grandeurs de réglage transmises pour les bobines d'entraînement virtuelles requises (ASk.m+1, ..., ASk.m+j) pour alimenter en énergie les bobines d'entraînement (ASk+1.1, ..., ASk+1.m) de la seconde zone de régulation (RZk+1) requises pour le déplacement de l'unité de transport (Tn).

2. Procédé selon la revendication 1, **caractérisé en ce que** la seconde unité de régulation de segment (SRk+1) associe les bobines d'entraînement virtuelles (ASk.m+1, ..., ASk.m+j) de la première zone de régulation (RZk) aux bobines d'entraînement (ASk+1.1, ..., ASk+1.m) de la seconde zone de régulation (RZk+1) et utilise les grandeurs de réglage obtenues des bobines d'entraînement virtuelles (ASk.m+1, ..., ASk.m+j) pour alimenter en énergie les bobines d'entraînement associées (ASk+1.1, ASk+1.m) de la seconde zone de régulation (RZk+1).

3. Procédé selon la revendication 1 ou 2, **caractérisé en ce que**, à partir d'un moment défini du passage, la responsabilité de la régulation du déplacement de l'unité de transport (Tn) passe à la seconde unité de régulation de segment (SRk+1) de la seconde zone de régulation (RZk+1) et la seconde zone de régulation (RZk+1) est élargie dans la direction opposée à la direction de déplacement (x) par un nombre (j) de bobines d'entraînement virtuelles (ASk+1.0, ASk+1.1-j), et la seconde unité de régulation de segment (SRk+1) associée à la seconde zone de régulation (RZk+1) calcule également les grandeurs de réglage pour les bobines d'entraînement virtuelles requises (ASk+1. 0, ASk+1.1-j), **en ce que** la seconde unité de régulation de segment (SRk+1) transmet les grandeurs de réglage requises pour les bobines d'entraînement virtuelles requises (ASk+1.0, ..., ASk+1.1-j) à la première unité de régulation de segment associée à la première zone de régulation (RZk), et **en ce que** la première unité de régulation de segment (SRk) utilise les grandeurs de réglage transmises pour les bobines d'entraînement virtuelles requises (ASk+1.0, ..., ASk+1.1-j) pour alimenter en énergie les bobines d'entraînement (ASk.1, ..., ASk.m) de la première zone de régulation (RZk), requises pour le déplacement de l'unité de transport (Tn).

4. Procédé selon la revendication 3, **caractérisé en ce que** la première unité de régulation de segment (SRk) associe les bobines d'entraînement virtuelles (ASk+1.0, ..., ASk+1.1-j) de la seconde zone de régulation (RZk+1) aux bobines d'entraînement (ASk.1, ..., ASk.m) de la première zone de régulation (RZk) et utilise les grandeurs de réglage obtenues des bobines d'entraînement virtuelles (ASk+1.0, ..., ASk+1.1-j) pour alimenter en énergie les bobines d'entraînement (ASk.1, ..., ASk.m) associées de la première zone de régulation (RZk).

5. Procédé selon la revendication 3, **caractérisé en ce que** la responsabilité passe de la première unité de régulation de segment (SRk) à la seconde unité de régulation de segment (SRk+1) lorsque le centre de l'ensemble d'aimants d'entraînement (3) de l'unité de transport (Tn) passe de la première zone de régulation (RZk) à la seconde zone de régulation (RZk+1).

6. Moteur linéaire à stator long comportant une pluralité de bobines d'entraînement (ASk.1, ..., ASk.m, ASk+1.1, ..., ASk+1.m), qui forment un stator long (2) du moteur linéaire à stator long (1), le long duquel une unité de transport (Tn) comportant un ensemble d'aimants d'entraînement (3) peut être déplacé dans la direction de déplacement (x), dans lequel le stator long (2) est divisé en au moins une première zone de régulation (RZk) comportant une pluralité de bobines d'entraînement (ASk.1, ..., ASk.m) et une seconde zone de régulation (RZk+1) comportant une pluralité de bobines d'entraînement (ASk+1.1, ..., ASk+1.m), dans lequel une première unité de régulation de segment (SRk) pour la régulation des bobines d'entraînement (ASk.1, ..., ASk.m) de la première zone de régulation (RZk) est associée à la première zone de régulation (RZk) et une seconde unité de régulation de segment (SRk+1) pour la régulation des bobines d'entraînement (ASk+1.1, ..., ASk+1.m) de la seconde zone de régulation (RZK+1) est associée à la seconde zone de régulation (RZk+1), dans lequel, dans une zone de régulation (RZk, RZk+1), l'unité de régulation de segment (SRk, SRk+1) associée calcule les grandeurs de réglage destinées à alimenter en énergie les bobines d'entraînement (ASk.1, ..., ASk.m, ASk+1.1, ..., ASk+1.m) requises pour le déplacement de l'unité de transport (Tn) dans une zone de régulation (RZk, RZk+1), tant que l'unité de transport (Tn) se trouve exclusivement dans une zone de régulation (RZk, RZk+1), **caractérisé en ce que**, lors du passage de l'unité de transport (Tn) de la première zone de régulation (RZk) dans la direction de déplacement (x) à la seconde zone de régulation (RZk+1) suivante, des bobines d'entraînement (ASk.1, ..., ASk.m, ASk+1.1, ..., ASk+1.m) de la première zone de régulation (RZk) et de la seconde zone de régulation (RZk+1) devant être alimentées en énergie pour le déplacement de l'unité de transport (Tn), d'abord la première unité de régulation de segment (SRk) reste responsable de la régulation du déplacement de l'unité de transport (Tn), et la première unité de régulation de segment (SRk) calcule les grandeurs de réglage pour un nombre (j) de bobines d'entraînement virtuelles (ASk.m+1, ..., ASk.m+j), qui se connectent virtuellement à la première zone de régulation (SRk) dans la direction de déplacement (x), **en ce qu'**une ligne de communication de données (5) est prévue, laquelle ligne communication de données relie la première unité de régulation de segment (SRk) à la seconde unité de régulation de segment (SRk+1), et la première unité de régulation de segment (SRk) transmet les grandeurs de réglage requises pour les bobines d'entraînement virtuelles requises (ASk.m+1, ..., ASk.m+j) à la seconde unité de régulation de segment (SRk+1), et **en ce que** la seconde unité de régulation de segment (SRk+1) utilise les grandeurs de réglage transmises pour les bobines d'entraînement virtuelles requises (ASk.m+1, ..., ASk.m+j) pour alimenter les bobines d'entraînement (ASk+1.1, ..., ASk+1.m) de la seconde zone de régulation (RZk+1) qui sont requises pour le déplacement de l'unité de transport (Tn).

7. Moteur linéaire à stator long selon la revendication 6, **caractérisé en ce que** la seconde unité de régulation de segment (SRk+1) associe les bobines d'entraînement virtuelles (ASk.m+1, ..., ASk.m+j) de la première zone de régulation (RZk) aux bobines d'entraînement (ASk+1.1, ..., ASk+1.m) de la seconde zone de régulation (RZk+1) et utilise les grandeurs de réglage obtenues des bobines d'entraînement virtuelles (ASk.m+1, ..., ASk.m+j) pour alimenter en énergie les bobines d'entraînement (ASk+1.1, ..., ASk+1.m) associées de la seconde zone de régulation (RZk+1).

8. Moteur linéaire à stator long selon la revendication 6 ou 7, **caractérisé en ce que**, à partir d'un moment défini du passage, la responsabilité de la régulation du déplacement de l'unité de transport (Tn) passe à la seconde unité de régulation de segment (SRk+1) de la seconde zone de régulation (RZk+1) et la seconde unité de régulation de segment (SRk+1) calcule les grandeurs de réglage pour un nombre (j) de bobines d'entraînement virtuelles (ASk+1.0, ..., ASk+1.1-j), qui se trouvent virtuellement devant la seconde zone de régulation (RZk+1) dans la direction de déplacement (x), **en ce que** la seconde unité de régulation de segment (SRk+1) transmet les grandeurs de réglage requises pour les bobines d'entraînement virtuelles requises (ASk+1.0, ..., ASk+1.1-j) à la première unité de régulation de segment (SRk), et **en ce que** la première unité de régulation de segment (SRk) utilise les grandeurs de réglage transmises pour les bobines d'entraînement virtuelles requises (ASk+1.0, ..., ASk+1.1-j) pour alimenter en énergie les bobines d'entraînement de la première zone de régulation (RZk) requises (ASk.1, ..., ASk.m) pour le déplacement de l'unité de transport (Tn).

9. Moteur linéaire à stator long selon la revendication 8, **caractérisé en ce que** la première unité de régulation de segment (SRk) associe les bobines d'entraînement virtuelles (ASk+1.0, ..., ASk+1.1-j) de la seconde zone de régulation (RZk+1) aux bobines d'entraînement (ASk.1, ..., ASk.m) de la première zone de régulation (RZk) et utilise les grandeurs de réglage obtenues des bobines d'entraînement virtuelles (ASk+1.0, ..,, ASk+1.1-j) pour alimenter en énergie les bobines d'entraînement (ASk.1, ..., ASk.m) associées de la première zone de régulation (RZk).

10. Moteur linéaire à stator long selon la revendication 8, **caractérisé en ce que** la responsabilité passe de la première unité de régulation de segment (SRk) à la seconde unité de régulation de segment (SRk+1) lorsque le centre de l'ensemble d'aimants d'entraînement (3) de l'unité de transport (Tn) passe de la première zone de régulation (RZk) à la seconde zone de régulation (RZk+1).
